# EUROPEAN PATENT APPLICATION

(11) **EP 4 738 966 A1**
(43) Date of publication of application: **06.05.2026**
(21) Application number: 24849238.1
(22) Date of filing: 01.08.2024
(51) Int. Cl.: H04W 72/30, H04W 4/06, H04W 76/40

(54) **COMMUNICATION METHOD**

(30) Priority: 02.08.2023 US 202363530315 P
(71) Applicant: Kyocera Corporation, Kyoto-shi, Kyoto 612-8501 (JP)
(72) Inventor: FUJISHIRO, Masato, Kyoto-shi, Kyoto 612-8501 (JP); CHANG, Henry, San Diego, California 92123 (US)
(74) Representative: Viering, Jentschura & Partner mbB Patent- und Rechtsanwälte
(86) International application number: PCT/JP2024/027477
(87) International publication number: WO 2025/028593

(57) **Abstract**

A communication method performed by user equipment in a mobile communication system that provides a multicast/broadcast service (MBS) includes: receiving, from a network node, a radio resource control (RRC) release message including configuration information of a multicast inactive multicast radio bearer (MRB) used for reception of a multicast session in an RRC inactive state, the RRC release message causing the user equipment to transition to the RRC inactive state; confirming whether the RRC release message includes state information regarding whether the multicast session has been activated; and starting a multicast reception process using the multicast inactive MRB based on the configuration information when the RRC release message does not include the state information.

## Description

### TECHNICAL FIELD

The present disclosure relates to a communication method used in a mobile communication system.

### BACKGROUND OF INVENTION

The 3rd Generation Partnership Project (3GPP) defines the technical specifications of New Radio (NR), which is a radio access technology of the fifth generation (5G). NR has features such as high speed, large capacity, high reliability, and low latency as compared to Long Term Evolution (LTE) that is a radio access technology of the fourth generation (4G). The 3GPP has defined technical specifications of multicast/broadcast services (MBS) of 5G/NR.

In 3GPP release 17, MBS multicast reception (i.e., multicast reception) is possible only for user equipment in a radio resource control (RRC) connected state (see, for example, Non-Patent Document 1). On the other hand, in 3GPP release 18, technical specifications are scheduled to be extended so that user equipment in an RRC inactive state can perform multicast reception.

### CITATION LIST

### NON-PATENT LITERATURE

Non-Patent Document 1: 3GPP Technical Specification: TS 38.300 V17.5.0

### SUMMARY

A communication method according to a first aspect is a method performed by user equipment in a mobile communication system for providing a multicast/broadcast service (MBS). The communication method includes: receiving, from a network node, a radio resource control (RRC) release message including PTM configuration information used for reception of a multicast session in the RRC inactive state, the RRC release message causing the user equipment to transition to the RRC inactive state; confirming whether the RRC release message includes predetermined information indicating that start of a multicast reception process for the multicast session is suspended; and starting the multicast reception process based on the PTM configuration information when the RRC release message does not include the predetermined information.

A communication method according to a second aspect is a method performed by user equipment in a mobile communication system that provides a multicast/broadcast service (MBS). The communication method includes: receiving a multicast session using a multicast-multicast radio bearer (MRB) in a radio resource control (RRC) connected state; receiving, from a network node, an RRC release message including configuration information of a multicast inactive MRB used for reception of a multicast session in an RRC inactive state, the RRC release message causing the user equipment to transition to the RRC inactive state; confirming whether the multicast inactive MRB corresponding to multicast MRB is configured; and starting a multicast reception process using the multicast inactive MRB when the multicast inactive MRB corresponding to the multicast MRB is configured.

A communication method according to a third aspect is a method performed by user equipment in a mobile communication system that provides a multicast/broadcast service (MBS). The communication method includes: receiving, from a network node, a radio resource control (RRC) release message including configuration information of a multicast inactive multicast radio bearer (MRB) used for reception of a multicast session in an RRC inactive state, the RRC release message causing the user equipment to transition to the RRC inactive state; attempting the reception of the multicast session using the multicast inactive MRB based on upper layer information stored in advance; and continuing a multicast reception process using the multicast inactive MRB when the reception of the multicast session is successful as a result of the attempting.

### BRIEF DESCRIPTION OF THE DRAWINGS

FIG. 1 is a diagram illustrating a configuration example of a mobile communication system according to an embodiment.
FIG. 2 is a diagram illustrating a configuration example of a UE (user equipment) according to an embodiment.
FIG. 3 is a diagram illustrating a configuration example of a gNB (network node) according to an embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram illustrating an example of an operation of a mobile communication system for a first operation pattern according to an embodiment.
FIG. 7 is a diagram illustrating an example of an operation of a mobile communication system for a second operation pattern according to an embodiment.
FIG. 8 is a diagram illustrating an example of an operation of a mobile communication system for a third operation pattern according to an embodiment.
FIG. 9 is a diagram illustrating an initial configuration procedure for a connected UE.

### DESCRIPTION OF EMBODIMENTS

A mobile communication system according to an embodiment is described with reference to the drawings. In the description of the drawings, the same or similar parts are denoted by the same or similar reference signs.

### (1) System Configuration Example

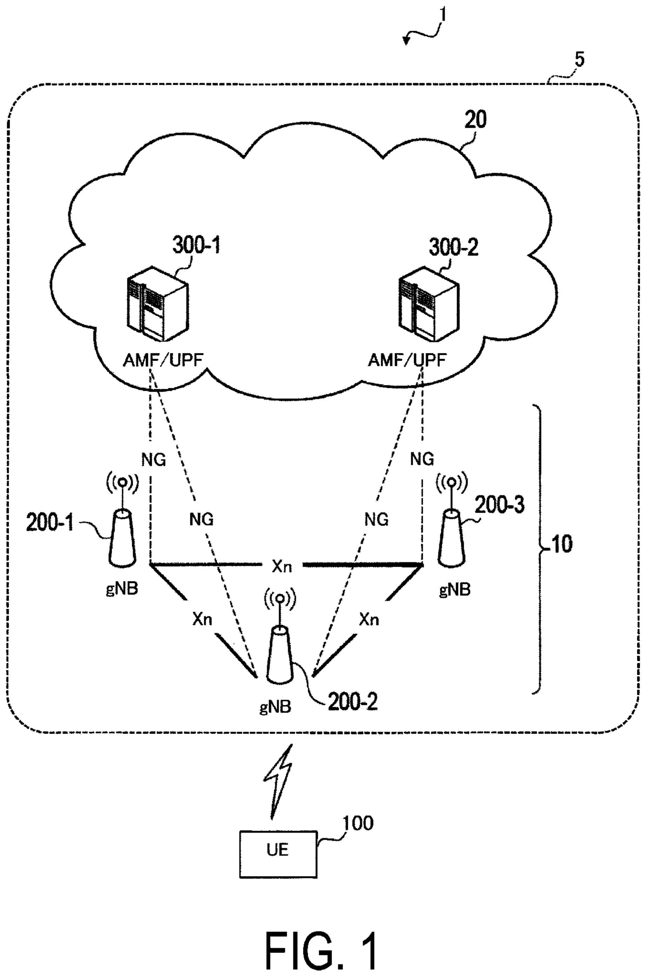

FIG. 1 is a diagram illustrating a configuration example of a mobile communication system 1 according to the embodiment. The mobile communication system 1 complies with the 5th Generation System (5GS) of the 3GPP standard. The description below takes the 5GS as an example, but Long Term Evolution (LTE) system may be at least partially applied to the mobile communication system. Alternatively, a sixth generation (6G) system may be at least partially applied to the mobile communication system.

The mobile communication system 1 includes User Equipment (UE) 100, a 5G radio access network (Next Generation Radio Access Network (NG-RAN)) 10, and a 5G Core Network (5GC) 20. Hereinafter, the NG-RAN 10 may be simply referred to as a RAN 10. The 5GC 20 may be simply referred to as a core network (CN) 20. The RAN 10 and the CN 20 configure a network 5 of the mobile communication system 1.

The UE 100 is a mobile wireless communication apparatus. The UE 100 may be any apparatus as long as the UE 100 is used by a user. Examples of the UE 100 include a mobile phone terminal (including a smartphone) and/or a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes base stations (referred to as "gNBs" in 5G systems) 200 which are a type of network node. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter simply referred to as a "frequency").

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

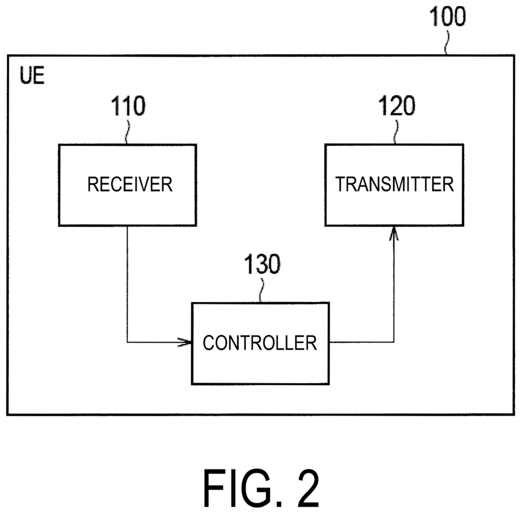

FIG. 2 is a diagram illustrating a configuration example of the UE 100 (user equipment) according to the embodiment. The UE 100 includes a receiver 110, a transmitter 120, and a controller 130. The receiver 110 and the transmitter 120 constitute a wireless communicator that performs wireless communication with the gNB 200.

The receiver 110 performs various receptions under the control of the controller 130. The receiver 110 includes an antenna and a reception device. The reception device converts a radio signal or a terahertz wave signal received through the antenna into a baseband signal (a reception signal) and outputs the resulting signal to the controller 130.

The transmitter 120 performs various transmissions under the control of the controller 130. The transmitter 120 includes an antenna and a transmission device. The transmission device converts a baseband signal (a transmission signal) output by the controller 130 into a radio signal or a terahertz wave signal and transmits the resulting signal through the antenna.

The controller 130 performs various controls and processes in the UE 100. Such processing includes processing of respective layers to be described later. The operations of the UE 100 described above and below may be operations under the control of a controller 230. The controller 130 includes at least one processor and at least one memory. The memory stores a program to be executed by the processor and information to be used for processing in the processor. The processor may include a baseband processor and a central processing unit (CPU). The baseband processor performs modulation and demodulation, coding and decoding, and the like of a baseband signal. The CPU executes the program stored in the memory to thereby perform various types of processing.

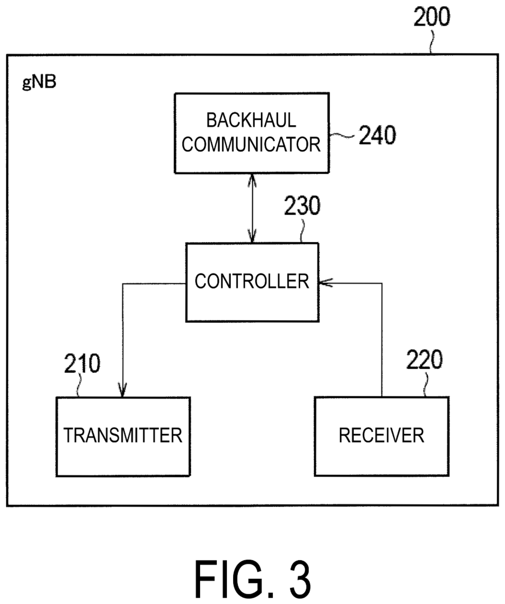

FIG. 3 is a diagram illustrating a configuration example of the gNB 200 (network node) according to the embodiment. The gNB 200 includes a transmitter 210, a receiver 220, a controller 230, and a backhaul communicator 240. The transmitter 210 and the receiver 220 constitute a wireless communicator that performs wireless communication with the UE 100. The backhaul communicator 240 constitutes a network communicator that performs communication with the CN 20.

The transmitter 210 performs various transmissions under the control of the controller 230. The transmitter 210 includes an antenna and a transmission device. The transmission device converts a baseband signal (a transmission signal) output by the controller 230 into a radio signal or a terahertz wave signal and transmits the resulting signal through the antenna.

The receiver 220 performs various types of reception under control of the controller 230. The receiver 220 includes an antenna and a reception device. The reception device converts a radio signal or a terahertz wave signal received through the antenna into a baseband signal (a reception signal) and outputs the resulting signal to the controller 230.

The controller 230 performs various types of control and processing in the gNB 200. Such processing includes processing of respective layers to be described later. The operations of the gNB 200 described above and below may be also performed under the control of the controller 230. The controller 230 includes at least one processor and at least one memory. The memory stores a program to be executed by the processor and information to be used for processing in the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via an Xn interface which is an inter-base station interface. The backhaul communicator 240 is connected to the AMF/UPF 300 via an NG interface which is an interface between a base station and the core network. Note that the gNB 200 may include a Central Unit (CU) and a Distributed Unit (DU) (i.e., functions are divided), and both units may be connected via an F1 interface that is a fronthaul interface.

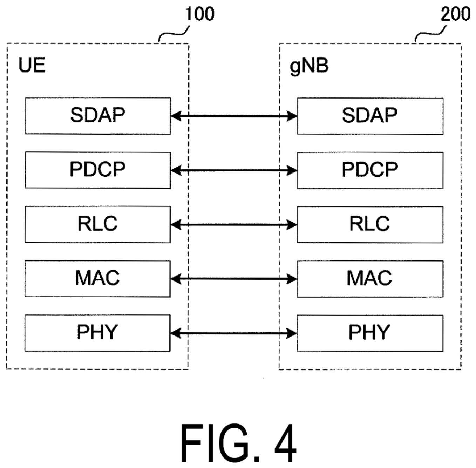

FIG. 4 is a diagram illustrating a configuration of a protocol stack of a radio interface of a user plane handling data.

A radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs encoding/decoding, modulation/demodulation, antenna mapping/demapping, and resource mapping/demapping. Data and control information are transmitted between the PHY layer of the UE 100 and the PHY layer of the gNB 200 via a physical channel. Note that the PHY layer of the UE 100 receives downlink control information (DCI) transmitted from the gNB 200 over a physical downlink control channel (PDCCH). Specifically, the UE 100 performs blind decoding of the PDCCH by using a radio network temporary identifier (RNTI) and acquires a successfully decoded DCI as a DCI addressed to the UE. CRC parity bits scrambled by the RNTI are added to the DCI transmitted from the gNB 200.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

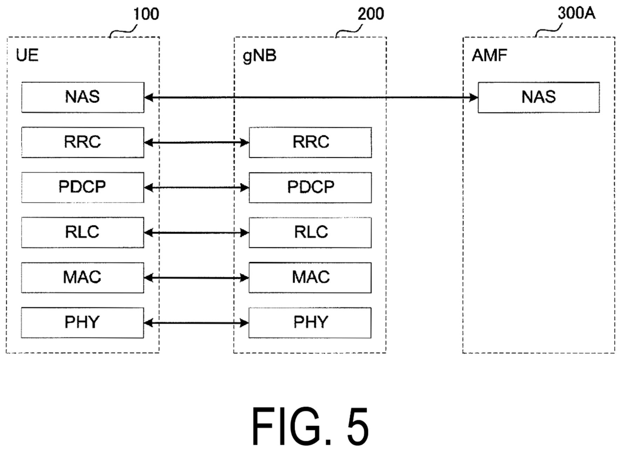

FIG. 5 is a diagram illustrating a configuration of a protocol stack of a radio interface of a control plane handling signaling (a control signal).

The protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When connection (RRC connection) is established between RRC of the UE 100 and RRC of the gNB 200, the UE 100 is in an RRC connected state. When connection (RRC connection) is not established between the RRC of the UE 100 and the RRC of the gNB 200, the UE 100 is in an RRC idle state. When the connection between the RRC of the UE 100 and the RRC of the gNB 200 is suspended, the UE 100 is in an RRC inactive state.

The NAS layer (also simply referred to as "NAS"), which is located above the RRC layer, performs session management, mobility management, and the like. NAS signaling is transmitted between the NAS layer of the UE 100 and the NAS layer of an AMF 300A. The UE 100 includes an application layer other than the protocol of the radio interface. The layer below the NAS layer is referred to as an AS layer (also simply referred to as "AS").

### (2) Overview of MBS

The mobile communication system 1 can perform delivery with high resource efficiency by using the multicast/broadcast service (MBS).

### (2.1) MBS Broadcast

In a case of the broadcast communication services (also referred to as "MBS broadcast"), the same service and the same specific content data are provided simultaneously to every UE 100 in a geographic area. That is, every UE 100 in the broadcast service area is permitted to receive the data. The broadcast communication services are delivered to the UE 100 using a broadcast session that is a type of MBS session. The UE 100 can receive the broadcast session in any of the RRC idle state, the RRC inactive state, and the RRC connected state.

Point-to-Multipoint (PTM) delivery is applied to the broadcast communication service. For the PTM transmission, the gNB 200 delivers a single copy of an MBS packet to a set (group) of a plurality of UEs 100. For example, the gNB 200 uses a group-common PDCCH with a cyclic redundancy code (CRC) scrambled by a group RNTI (G-RNTI) that is a group-common RNTI to schedule a group-common PDSCH scrambled by the G-RNTI.

For the broadcast communication service, the UE 100 receives a broadcast session in the following procedure. First, the UE 100 receives system information block type 20 (SIB 20) from the gNB 200. The SIB 20 includes a configuration of a multicast control channel (MCCH), which is a type of logical channel. Second, the UE 100 receives the MCCH from the gNB 200 based on the SIB 20. The MCCH includes a PTM configuration. The PTM configuration transmits a configuration for a multicast traffic channel (MTCH) (MTCH configuration), which is a type of logical channel, and a configuration of a broadcast multicast radio bearer (MRB), which is an MRB for broadcast session. The information transmitted by the MCCH may be referred to as MBS broadcast control information. Third, the UE 100 receives the MTCH based on the MCCH. The MTCH transmits a broadcast session (specifically, MBS data belonging to the broadcast session).

Note that the MCCH is a PTM downlink channel for transmitting the MBS broadcast control information associated with one or a plurality of MTCHs from the network 5 to the UE 100. The MTCH is a PTM downlink channel for transmitting MBS data of any of a multicast session or a broadcast session from the network 5 to the UE 100.

### (2.2) MBS Multicast

For a multicast communication service (also referred to as "MBS multicast"), the same service and the same specific content data are simultaneously provided to a specific UE set. That is, not every UE 100 in the multicast service area is permitted to receive data. The multicast communication service is delivered to the UE 100 using a multicast session that is a type of MBS session.

The UE 100 can receive a multicast session only after joining the multicast session (session join). The joining the multicast session may mean that the UE 100 is registered as being capable of receiving the multicast session in the network 5 (the CN 20).

For the multicast communication service, in 3GPP release 17, only the UE 100 in the RRC connected state can receive a multicast session. On the other hand, in 3GPP release 18, enhancement will be made such that the UE 100 in the RRC inactive state can also receive a multicast session.

### (2.2.1) Multicast Reception in RRC Connected State

The UE 100 in the RRC connected state can receive a multicast session (specifically, MBS data belonging to a multicast session) by using mechanisms such as Point-to-Point (PTP) delivery and/or Point-to-Multipoint (PTM) delivery.

For the multicast communication service, the UE 100 in the RRC connected state receives a multicast session in the following procedure. First, the UE 100 receives an RRC Reconfiguration message from the gNB 200. The RRC Reconfiguration message is a message transmitted on a dedicated control channel (DCCH). The RRC Reconfiguration message transmits a configuration for an MTCH for multicast session reception (MTCH configuration) and a configuration of a multicast MRB which is an MRB for multicast session. Second, the UE 100 receives an MTCH based on the RRC Reconfiguration message. The MTCH transmits a multicast session (specifically, MBS data belonging to the multicast session).

### (2.2.2) Multicast Reception in RRC Inactive State

The UE 100 in the RRC inactive state may receive a multicast session (specifically, MBS data belonging to the multicast session) by using the mechanism of the PTM delivery.

For the multicast communication service, the UE 100 in the RRC inactive state can receive a multicast session in the following procedure. First, the UE 100 in the RRC inactive state receives a newly introduced system information block (also referred to as "SIBx") from the gNB 200. The SIBx includes a configuration of a newly introduced MCCH (also referred to as a "multicast MCCH"). Second, the UE 100 in the RRC inactive state receives a multicast MCCH from the gNB 200 based on the SIBx. The multicast MCCH includes a PTM configuration. The PTM configuration transmits a configuration for an MTCH for receiving a multicast session (MTCH configuration) and a configuration of a multicast inactive MRB which is an MRB for receiving a multicast session in an RRC inactive state (multicast inactive MRB configuration). The MTCH configuration may be included in the multicast inactive MRB configuration. Third, the UE 100 in the RRC inactive state receives an MTCH based on the multicast MCCH. The MTCH transmits a multicast session, specifically, MBS data belonging to the multicast session (that is, multicast data).

When the gNB 200 configures the UE 100 to receive a multicast session in the RRC inactive state, the gNB 200 can transmit a PTM configuration (multicast inactive MRB configuration) to the UE 100 using an RRC release (Release) message including a suspend configuration. In this case, when the UE 100 receives the RRC release message including the PTM configuration from the gNB 200, the UE 100 transitions to the RRC inactive state and receives the multicast session in the RRC inactive state (multicast reception process).

### (2.2.3) Group Notification

When there is temporarily no data to be transmitted to the UE 100 in the active multicast session, the gNB 200 may transition the UE 100 to the RRC inactive state. When the multicast session is deactivated, the gNB 200 may cause the UE 100 to transition to the RRC idle state or the RRC inactive state.

The gNB 200 supporting the MBS notifies the UE 100 in the RRC idle state or the RRC inactive state by using a group notification mechanism when the multicast session is activated by the CN 20. The gNB 200 that supports MBS may perform a notification to the UE 100 in the RRC inactive state using a group notification mechanism when a multicast session has been activated and the gNB 200 has multicast session data to deliver.

Upon receiving the group notification, the UE 100 reconnects to the network 5 or resumes the connection to transition to the RRC connected state. The group notification is processed with a paging RNTI (P-RNTI) on the PDCCH, and a paging channel is monitored by the UE 100.

A paging message used for the group notification includes session identifiers (MBS session IDs) for paging all UEs 100 in the RRC idle state and the RRC inactive state that have joined the associated MBS multicast session. That is, the UE 100 is not individually paged.

When the UE 100 transitions to the RRC connected state, the UE 100 may stop monitoring the group notification associated with the particular multicast session. That is, the UE 100 stops checking the MBS session ID in the paging message. The UE 100 does not monitor the group notification in a case where the UE 100 leaves the multicast session, the network 5 requests the UE 100 to leave the multicast session, or the network 5 releases the multicast session.

Note that the group notification may be performed on the MCCH or may be performed with an MCCH Change Notification. In the case of using the MCCH, the determination may be made depending on whether the MTCH configuration of the MBS session of interest is present in the MCCH. In a case of using the MCCH Change Notification, the group notification may be made in a predetermined bit of the DCI.

### (3) Operation of Mobile Communication System

An operation of the mobile communication system 1 according to the embodiment will be described.

As described above, when the gNB200 transmits the RRC release message (specifically, the RRC release message including the suspend configuration) causing the UE100 to transition to the RRC inactive state to the UE100 in the RRC connected state, the PTM configuration related to the reception of the multicast session in the RRC inactive state can be included in the RRC release message. The PTM configuration includes configuration information of a multicast inactive MRB used for reception of a multicast session in an RRC inactive state.

At a point in time when such an RRC release message is transmitted from the gNB 200 to the UE 100, a multicast session may not yet be activated. The UE 100 establishes a multicast inactive MRB with the gNB 200 based on the PTM configuration included in the RRC release message and starts a multicast session reception process (also referred to as a "multicast reception process").

However, even when the UE 100 starts the multicast reception process in a situation where the multicast session has not been activated, the UE 100 cannot receive the multicast session, specifically, cannot receive multicast data transmitted on the MTCH. For this reason, the UE 100 may perform the multicast reception process even though the multicast cannot be received and consume power wastefully.

Hereinafter, first to third operation patterns for solving such a problem will be described. Each of the first to third operation patterns may be performed independently, or two or more operation patterns may be performed in combination.

### (3.1) First Operation Pattern

In the first operation pattern, the UE 100 receives, from the gNB 200, an RRC release message that includes configuration information (multicast inactive MRB configuration) for a multicast inactive MRB used for reception of a multicast session in an RRC inactive state and causes the UE 100 to transition to the RRC inactive state. The UE 100 confirms whether state information (hereinafter also referred to as "session state information") on whether the RRC release message includes the multicast session is activated. When the session state information is not included in the RRC release message, the UE 100 starts a multicast reception process using the multicast inactive MRB based on the multicast inactive MRB configuration. That is, when the multicast inactive MRB is configured with the RRC release message, the UE 100 may establish the multicast inactive MRB by immediately applying the configuration and start an MTCH reception process.

In this manner, in the first operation pattern, the RRC release message may include session state information regarding whether the multicast session has been activated. Thereby, the UE 100 can know whether the multicast session has been activated based on the session state information. As a result, the UE 100 can appropriately decide whether to immediately start the multicast reception process. In addition, when the session state information is not included in the RRC release message, the UE 100 considers that the multicast session has been activated and can immediately start the multicast reception process.

In the first operation pattern, when the RRC release message includes the session state information and the session state information is information indicating that the multicast session has not been activated, the UE 100 may suspend the start of the multicast reception process. Thereby, the UE 100 can be prevented from performing the multicast reception process even though the UE 100 cannot receive the multicast data, and the power consumption of the UE 100 can be reduced. The session state information may be information indicating that the multicast session has not been activated. The session state information may be information indicating that a multicast transmission process is suspended (or interrupted). For example, the session state information may be information indicating that the start of the multicast reception process is suspended (or interrupted). For example, the session state information may be information indicating that the reception of the MTCH (or the multicast inactive MRB) of the multicast session is not to be performed or suspended.

For example, when the multicast inactive MRB configuration includes information indicating that a multicast session is inactive, the UE 100 may apply at least one selected from the group consisting of the following 1) to 3). 1) A multicast inactive MRB configuration is not applied. 2) A multicast inactive MRB is not established. 3) An MTCH reception process is not started.

In the first operation pattern, when the RRC release message includes the session state information and the session state information is information indicating that the multicast session has been activated, the UE 100 may start a multicast reception process. Thereby, since the UE 100 can immediately start the multicast reception process when the multicast session has been activated, multicast data can be smoothly received. Such session state information may be information indicating that a multicast session has been activated. The session state information may also be information indicating start of a multicast reception process.

In the first operation pattern, the session state information may be associated with a configuration of group Discontinuous Reception (DRX) to be applied to reception of one or a plurality of multicast sessions. That is, the session state information may be configured for each group DRX configuration.

In the first operation pattern, the multicast inactive MRB configuration may include a configuration of each of a plurality of multicast inactive MRBs. The session state information may include information indicating that all of the plurality of multicast inactive MRBs are inactive and/or information indicating that at least one of the plurality of multicast inactive MRBs is active. For example, the session state information may be information indicating that at least one multicast session is active.

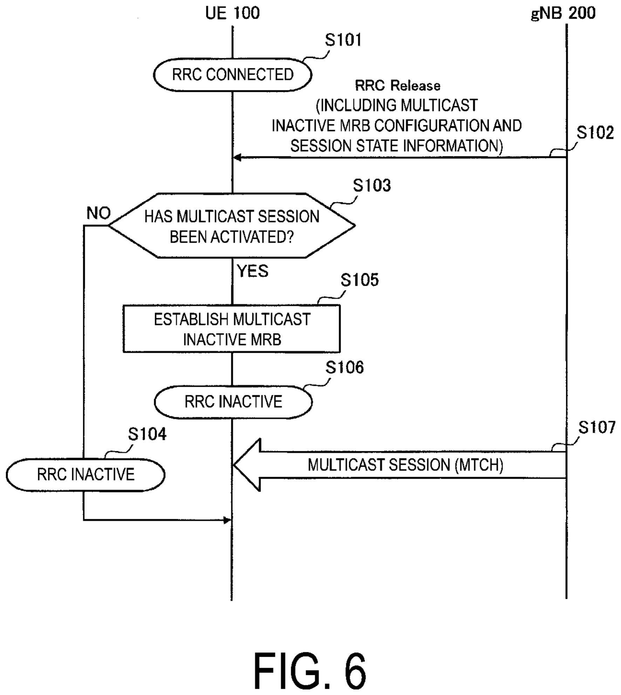

FIG. 6 is a diagram illustrating an example of an operation of the mobile communication system 1 for the first operation pattern.

In step S101, the UE 100 is in an RRC connected state in a cell of the gNB 200. The UE 100 is assumed to have joined a multicast session. The UE 100 may have joined a plurality of multicast sessions.

It is assumed that the gNB 200 knows the multicast session which the UE 100 has joined and whether each multicast session has been activated. The gNB 200 decides to perform reception configuration in an RRC inactive state on the UE 100 for the multicast session which the UE 100 is joining.

In step S102, the gNB 200 transmits an RRC release message including a multicast inactive MRB configuration to the UE 100. The UE 100 receives the RRC release message.

The multicast inactive MRB configuration includes an MRB ID of a multicast inactive MRB to be configured and/or an MBS session ID of a multicast session to be transmitted in the multicast inactive MRB. The MBS session ID may be a temporary mobile group identity (TMGI). Note that, when the UE 100 joins a plurality of multicast sessions, the multicast inactive MRB configuration may include a plurality of MRB IDs and/or a plurality of MBS session IDs corresponding to the plurality of multicast sessions. The multicast inactive MRB configuration may include a group DRX configuration for configuring a group DRX.

In the first operation pattern, the multicast inactive MRB configuration includes at least one selected from the group consisting of the following a) to c).
a) Information indicating that each multicast session (MBS session ID) or each MRB (MRB ID) is inactive. Alternatively, information indicating that each multicast session or each MRB is active. In this manner, the session state information may be associated with a multicast session or an MRB.
b) Information indicating that each group DRX configuration is inactive. Alternatively, information indicating that each group DRX configuration is active. Such information may be associated with an ID (index) of a group DRX. In this manner, the session state information may be associated with a group DRX configuration.
c) Information indicating that all multicast sessions are inactive. Alternatively, information indicating that at least one multicast session is active. Here, all multicast sessions may mean all of a plurality of multicast sessions in a case where the UE 100 joins the plurality of multicast sessions. All of the multicast sessions may mean all MBS session IDs included in the multicast inactive MRB configuration.

In the above a) to c), the information indicating being inactive is information indicating that the start of a multicast reception process is suspended and may be any of the following pieces of information:
- Information indicating that a multicast inactive MRB configuration is retained and a multicast inactive MRB configuration is not applied;
- Information indicating that a multicast inactive MRB configuration is applied and a multicast inactive MRB is not established;
- Information indicating that a multicast inactive MRB is established by applying a multicast inactive MRB configuration and an MTCH reception process is not performed;
- Information indicating that a multicast inactive MRB is suspended.

In the above a) to c), the information indicating being inactive is information indicating start of a multicast reception process and may be any of the following pieces of information:
- Information indicating that a multicast inactive MRB configuration is applied;
- Information indicating that a multicast inactive MRB is established;
- Information indicating that an MTCH reception process is performed.

In step S103, the UE 100 confirms whether a multicast session which the UE 100 itself is joining has been activated based on the session state information included in the RRC release message in step S102. The UE 100 may confirm whether to start a multicast reception process for the multicast session which the UE 100 itself is joining based on the session state information included in the RRC release message in step S102. The multicast reception process is a process of establishing a multicast inactive MRB by applying a multicast inactive MRB configuration and receiving an MTCH associated with the multicast inactive MRB.

When the multicast session in which the UE 100 is joining has not been activated (step S103: NO), the UE 100 suspends the start of a multicast reception process for the multicast session. Then, in step S104, the UE 100 transitions to an RRC inactive state in response to reception of the RRC release message in step S102. In this case, the UE 100 in the RRC inactive state may monitor the above-described group notification and may start a multicast reception process based on the multicast inactive MRB configuration in step S102 when it is specified that the multicast session which the UE 100 itself is joining has been activated based on the group notification.

On the other hand, when the multicast session which the UE 100 itself is joining has been activated (step S103: YES), the UE 100 starts a multicast reception process in step S105 and establishes a multicast inactive MRB by applying the multicast inactive MRB configuration received in step S102. In step S106, the UE 100 transitions to an RRC inactive state in response to the reception of the RRC release message in step S102. In step S107, the UE 100 receives a multicast session (multicast data) on the MTCH from the gNB 200 using the established multicast inactive MRB. Note that the order of steps S105 and S106 may be reversed.

### (3.2) Second Operation Pattern

A second operation pattern is described focusing on differences from the first operation pattern described above.

The second operation pattern is an operation pattern that does not require the above-described session state information. Specifically, in the second operation pattern, the UE 100 decides whether to start or suspend a multicast reception process using the multicast inactive MRB configuration received by the RRC release message based on the reception status of the multicast session (multicast MRB) in the RRC connected state. That is, the UE 100 that has received the RRC release message including the multicast inactive MRB configuration determines whether the multicast session transmitted with the configured multicast inactive MRB is active, in accordance with whether the multicast MRB for the RRC connected state has been configured.

For example, in the second operation pattern, the UE 100 receives a multicast session using a multicast MRB in an RRC connected state. The UE 100 receives, from the gNB 200, an RRC release message that includes a multicast inactive MRB configuration and causes the UE 100 to transition to an RRC inactive state. Here, the UE 100 confirms whether a multicast inactive MRB corresponding to the multicast MRB used in the RRC connected state has been configured. When the multicast inactive MRB corresponding to the multicast MRB used in the RRC connected state has been configured, the UE 100 starts a multicast reception process using the multicast inactive MRB.

Note that the multicast inactive MRB corresponding to the multicast MRB used in the RRC connected state may be a multicast inactive MRB having a common MBS session ID with the multicast MRB or may be a multicast inactive MRB having a common MRB ID with the multicast MRB.

In the second operation pattern, the UE 100 may suspend the start of a multicast reception process when a multicast inactive MRB that does not correspond to the multicast MRB used in the RRC connected state has been configured.

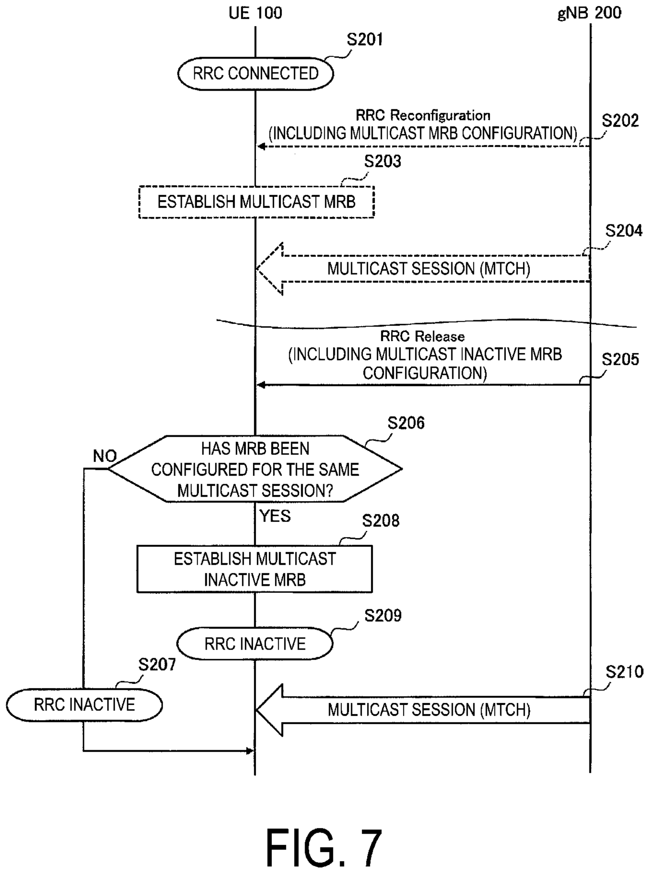

FIG. 7 is a diagram illustrating an example of an operation of the mobile communication system 1 for the second operation pattern.

In step S201, the UE 100 is in an RRC connected state in a cell of the gNB 200. The UE 100 is assumed to have joined a multicast session. The UE 100 may have joined a plurality of multicast sessions.

In step S202, the gNB 200 may transmit, to the UE 100, an RRC Reconfiguration message including a multicast MRB configuration for an RRC connected state. The UE 100 may receive the RRC Reconfiguration message.

In step S203, the UE 100 may establish a multicast MRB based on the multicast MRB configuration in step S202.

In step S204, the gNB 200 transmits a multicast session (multicast data) on an MTCH to the UE 100 using the multicast MRB. The UE 100 receives the multicast session using the multicast MRB.

In step S205, the gNB 200 transmits, to the UE 100, an RRC release message including a multicast inactive MRB configuration. The UE 100 receives the RRC release message.

The multicast inactive MRB configuration includes an MRB ID of a multicast inactive MRB to be configured and/or an MBS session ID of a multicast session to be transmitted by the multicast inactive MRB. The MBS session ID may be a temporary mobile group identity (TMGI). Note that, when the UE 100 joins a plurality of multicast sessions, the multicast inactive MRB configuration may include a plurality of MRB IDs and/or a plurality of MBS session IDs corresponding to the plurality of multicast sessions. The multicast inactive MRB configuration may include a group DRX configuration for configuring a group DRX.

In step S206, the UE 100 confirms whether the multicast inactive MRB configured in step S205 corresponds to the multicast MRB used in the RRC connected state. For example, the UE 100 confirms whether the multicast MRB having an MBS session ID shared by the multicast inactive MRB configured in step S205 has been used in the RRC connected state. Alternatively, the UE 100 may confirm whether the multicast MRB having the MRB ID shared by the multicast inactive MRB configured in step S205 has been used in the RRC connected state. Note that, when a plurality of multicast inactive MRBs are configured in step S205, such confirmation may be performed for each MBS session ID or each MRB ID corresponding to the plurality of multicast inactive MRBs.

When the multicast inactive MRB configured in step S205 does not correspond to the multicast MRB used in the RRC connected state (step S206: NO), the UE 100 considers that the multicast session transmitted by the multicast inactive MRB is inactive and suspends the start of a multicast reception process for the multicast session. In step S207, the UE 100 transitions to an RRC inactive state in response to the reception of the RRC release message in step S205. In this case, the UE 100 in the RRC inactive state may monitor the above-described group notification and may start a multicast reception process based on the multicast inactive MRB configuration in step S205 when it is specified that the multicast session which the UE 100 itself is joining has been activated based on the group notification.

On the other hand, when the multicast inactive MRB configured in step S205 corresponds to the multicast MRB used in the RRC connected state (step S206: YES), the UE 100 considers in step S208 that the multicast session transmitted by the multicast inactive MRB is active and starts a multicast reception process. The UE 100 applies the multicast inactive MRB configuration received in step S205 to establish a multicast inactive MRB. In step S209, the UE 100 transitions to the RRC inactive state in response to the reception of the RRC release message in step S205. In step S210, the UE 100 receives a multicast session (multicast data) on the MTCH from the gNB 200 using the established multicast inactive MRB. Note that the order of steps S208 and S209 may be reversed.

### (3.3) Third Operation Pattern

A third operation pattern is described focusing on differences from the first and second operation patterns described above.

Similar to the second operation pattern, the third operation pattern is an operation pattern in which the session state information described above is not required. In the third operation pattern, the UE 100 that has received an RRC release message including a multicast inactive MRB configuration determines whether a multicast session transmitted by a configured multicast inactive MRB is active based on upper layer information stored in advance.

The upper layer information is information managed by an upper layer. The upper layer may mean a layer higher than an AS layer and may be, for example, an application layer or a NAS layer. The upper layer information may be a user service description (USD). The USD may be provided to the UE 100 from a server in the upper layer. The USD includes information on a start time of each MBS session (also referred to as "session start time information"). For this reason, the UE 100 can determine whether the multicast session transmitted with the configured multicast inactive MRB is active based on the current time when the RRC release message including the multicast inactive MRB configuration is received and the session start time information included in the upper layer information (USD).

However, there is a possibility that information of the USD will be coarse or old information. For example, for a certain multicast session, even when "session is started at 11:00" is set in the USD, there may be a case where delivery is actually started (activation) at 11:05 in the network 5 of the mobile communication system 1. Even when the start of delivery is scheduled at 11:00, the start of actual delivery may be delayed due to the congestion of the network 5 or the like. Thus, in the third operation pattern, the UE 100 attempts a multicast reception process based on the upper layer information and determines whether to continue the multicast reception. Specifically, the UE 100 attempts reception of an MTCH with the configured multicast inactive MRB using the upper layer information and determines whether to continue the reception of the multicast session.
In the third operation pattern, the UE 100 receives, from the gNB 200, an RRC release message that includes a multicast inactive MRB configuration and causes the UE 100 to transition to an RRC inactive state. The UE 100 attempts the reception of the multicast session using the multicast inactive MRB based on the upper layer information stored in advance. When the reception of a multicast session is successful as a result of the attempting, the UE 100 continues the multicast reception process using the multicast inactive MRB. On the other hand, when the reception of a multicast session is unsuccessful as a result of the attempting, the UE 100 stops the multicast reception process.

In the third operation pattern, the UE 100 performs an attempt of a multicast reception attempt over a certain period of time. The certain period of time may be configured for the UE 100 from the gNB 200. That is, the attempt period for determining whether to continue the multicast reception may be configured by the gNB 200.

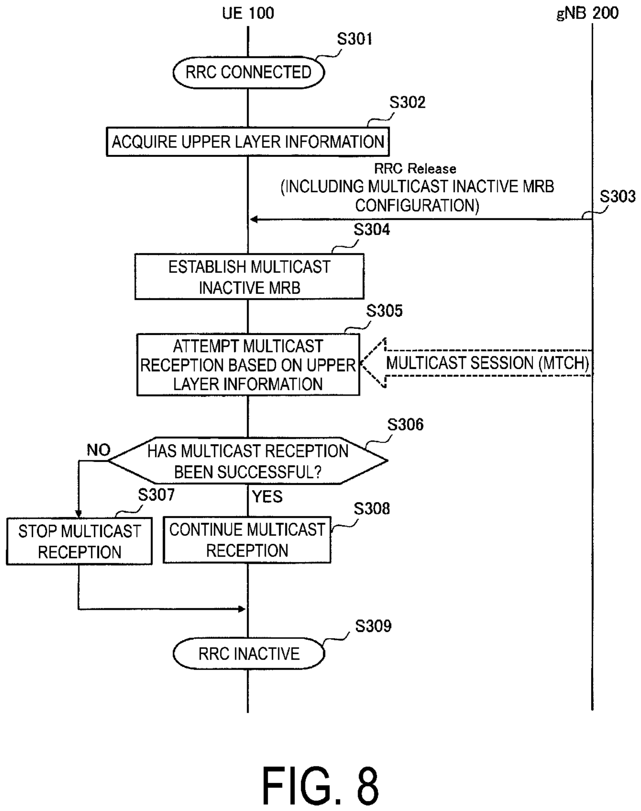

FIG. 8 is a diagram illustrating an example of an operation of the mobile communication system 1 for the third operation pattern.

In step S301, the UE 100 is in an RRC connected state in a cell of the gNB 200. The UE 100 is assumed to have joined a multicast session. The UE 100 may have joined a plurality of multicast sessions.

In step S302, the AS layer of the UE 100 acquires session start time information of the multicast session from an upper layer. For example, information of the USD is notified from the upper layer to the AS.

In step S303, the gNB 200 transmits an RRC release message including a multicast inactive MRB configuration to the UE 100. The UE 100 receives the RRC release message.

The multicast inactive MRB configuration includes an MRB ID of a multicast inactive MRB to be configured and/or an MBS session ID of a multicast session to be transmitted in the multicast inactive MRB. The MBS session ID may be a temporary mobile group identity (TMGI). Note that, when the UE 100 joins a plurality of multicast sessions, the multicast inactive MRB configuration may include a plurality of MRB IDs and/or a plurality of MBS session IDs corresponding to the plurality of multicast sessions. The multicast inactive MRB configuration may include a group DRX configuration for configuring a group DRX.

In step S304, the UE 100 establishes a multicast inactive MRB by applying the multicast inactive MRB configuration received in step S303. Here, the UE 100 may establish a multicast inactive MRB only when the current time is a timing after the session start time based on the upper layer information (session start time information). When the current time is before the session start time, the UE 100 may establish a multicast inactive MRB after transitioning to the RRC inactive state (step S309) and perform a multicast reception attempt.

In step S305, the UE 100 attempts to receive an MTCH (multicast session) using the multicast inactive MRB established in step S304.

In step S305, the UE 100 determines whether the attempt of the multicast reception (MTCH) is successful. When the MTCH cannot be normally received in a certain period of time, the UE 100 considers that the attempt of the multicast reception attempt is unsuccessful. The certain period of time may be configured in the UE 100 by the gNB 200 using an SIB or an RRC release message (step S303). When the UE 100 joins a plurality of multicast sessions, the certain period of time may be configured for each MBS session ID (MRB).

When it is determined that the attempt of the multicast reception is unsuccessful (step S306: NO), the UE 100 stops the multicast reception process (MTCH reception process) in step S307. The UE 100 may consider that the multicast session transmitted with the established multicast inactive MRB is inactive and may suspend the multicast inactive MRB. In this case, after transitioning to the RRC inactive state (step S309), the UE 100 may monitor the above-described group notification, and when it is specified, based on the group notification, that the multicast session which the UE 100 itself is joining has been activated, the UE 100 may start the multicast reception process based on the multicast inactive MRB configuration in step S303.

On the other hand, when it is determined that the attempt of the multicast reception attempt is unsuccessful (step S306: YES), the UE 100 considers in step S308 that the multicast session transmitted with the established multicast inactive MRB is inactive and continues the multicast reception process (MTCH reception process).

In step S309, the UE 100 transitions to the RRC inactive state in response to reception of the RRC release message in step S303.

In this operation example, after the UE 100 receives the RRC release message in step S303, the UE 100 may transition to the RRC inactive state before step S304. The UE 100 may transition to the RRC inactive state before step S305. The UE 100 may transition to the RRC inactive state before step S306.

### (4) Other Embodiments

Although the multicast reception in the RRC inactive state has been mainly described in the above-described embodiments, the operations according to the above-described embodiments may also be applied to multicast reception in the RRC idle state. With respect to the RRC idle state, the above-described RRC resume (Resume) can be read as RRC establishment (Establishment).

The operation flows described above can be separately and independently implemented and also be implemented in combination of two or more of the operation flows. For example, some steps of one operation flow may be added to another operation flow or some steps of one operation flow may be replaced with some steps of another operation flow. In each flow, all steps may not be necessarily performed, and only some of the steps may be performed.

Although the example in which the base station is an NR base station (gNB) has been described in the embodiments and examples described above, the base station may be an LTE base station (eNB) or a 6G base station. The base station may be a relay node such as an Integrated Access and Backhaul (IAB) node. The base station may be a DU of the IAB node. The UE 100 may be a Mobile Termination (MT) of the IAB node.

That is, the UE 100 may be a terminal function unit (a type of communication module) for a base station to control a repeater that performs signal relay. Such terminal function unit is referred to as an MT. Examples of the MT include, a Network Controlled Repeater (NCR)-MT, a Reconfigurable Intelligent Surface (RIS)-MT, in addition to the IAB-MT.

The term "network node" mainly means a base station, but may also mean a core network apparatus or a part (CU, DU, or RU) of the base station. The network node may include a combination of at least a part of the apparatus of the core network and at least a part of the base station.

A program causing a computer to execute each of the processing performed by the UE 100 or the gNB 200 may be provided. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited and may be, for example, a recording medium such as a CD-ROM or a DVD-ROM. Circuits for executing processing performed by the UE 100 or the gNB 200 may be integrated, and at least a part of the UE 100 and the gNB 200 may be implemented as a semiconductor integrated circuit (chipset, System on a chip (SoC)).

The functions achieved by the UE 100 or the gNB 200 (the network node) may be implemented in a circuitry or a processing circuitry programmed to perform the described functions, including a general-purpose processor, a special-purpose processor, an integrated circuit, application specific integrated circuits (ASICs), a central processing unit (CPU), a conventional circuit, and/or combinations thereof. The processor may include transistors and other circuits and may be considered a circuitry or a processing circuitry. The processor may be a programmed processor that executes a program stored in the memory. As used herein, a circuitry, a unit, means are hardware programmed to achieve, or hardware performing, the described functions. The hardware may be any hardware disclosed herein or any hardware programmed to achieve or known to perform the described functions. When the hardware is a processor that is considered to be a type of circuitry, the circuitry, means, or a unit is a combination of hardware and software used to configure the hardware and/or the processor.

The phrases "based on" and "depending on/in response to" used in the present disclosure do not mean "based only on" and "only depending on/in response to" unless specifically stated otherwise. The phrase "based on" means both "based only on" and "based at least in part on". The phrase "depending on" means both "only depending on" and "at least partially depending on". The terms "include," "comprise" and terms of variations thereof do not mean "include only items stated" but instead mean "may include only items stated" or "may include not only the items stated but also other items." The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a", "an", and "the" are added in the present disclosure through translation, these articles include the plural unless clearly indicated otherwise in context.

The embodiments have been described above in detail with reference to the drawings, but specific configurations are not limited to those described above, and various design variation can be made without departing from the gist of the present disclosure.

This application claims priority to US Provisional Patent Application No. 63/530315 (filed on August 2, 2023), the contents of which are incorporated herein by reference in their entirety.

### (5) First Supplementary Note

Features relating to the embodiments described above are described below as supplementary notes.

### Supplementary Note 1

A communication method performed by user equipment in a mobile communication system that provides a multicast/broadcast service (MBS), the communication method including:
receiving, from a network node, a radio resource control (RRC) release message including configuration information of a multicast inactive multicast radio bearer (MRB) used for reception of a multicast session in an RRC inactive state, the RRC release message causing the user equipment to transition to the RRC inactive state;
confirming whether the RRC release message includes state information regarding whether the multicast session has been activated; and
starting a multicast reception process using the multicast inactive MRB based on the configuration information when the RRC release message does not include the state information.

### Supplementary Note 2

The communication method according to supplementary note 1, further including suspending the start of the multicast reception process when the RRC release message includes the state information and the state information is information indicating that the multicast session has not been activated.

### Supplementary Note 3

The communication method according to supplementary note 2, wherein the state information is information indicating that the start of the multicast reception process is suspended.

### Supplementary Note 4

The communication method according to any one of supplementary notes 1 to 3, further including starting the multicast reception process when the RRC release message includes the state information and the state information is information indicating that the multicast session has been activated.

### Supplementary Note 5

The communication method according to supplementary note 4, wherein the state information is information indicating start of the multicast reception process.

### Supplementary Note 6

The communication method according to any one of supplementary notes 1 to 5, wherein the state information is associated with a configuration of group Discontinuous Reception (DRX) to be applied to reception of one or a plurality of multicast sessions.

### Supplementary Note 7

The communication method according to any one of supplementary notes 1 to 6, wherein the configuration information includes configurations of a plurality of multicast inactive MRBs, and
the state information includes at least one of information indicating that all of the plurality of multicast inactive MRBs are inactive and information indicating that at least one of the plurality of multicast inactive MRBs is active.

### Supplementary Note 8

A communication method performed by user equipment in a mobile communication system that provides a multicast/broadcast service (MBS), the communication method including:
receiving a multicast session using a multicast-multicast radio bearer (MRB) in a radio resource control (RRC) connected state;
receiving, from a network node, an RRC release message including configuration information of a multicast inactive MRB used for reception of a multicast session in an RRC inactive state, the RRC release message causing the user equipment to transition to the RRC inactive state;
confirming whether the multicast inactive MRB corresponding to multicast MRB is configured; and
starting a multicast reception process using the multicast inactive MRB when the multicast inactive MRB corresponding to the multicast MRB is configured.

### Supplementary Note 9

The communication method according to supplementary note 8, wherein the multicast inactive MRB corresponding to the multicast MRB is the multicast inactive MRB having a common MBS session ID with the multicast MRB or the multicast inactive MRB having a common MRB ID with the multicast MRB.

### Supplementary Note 10

The communication method according to supplementary note 8 or 9, further including suspending the start of the multicast reception process when the multicast inactive MRB not corresponding to the multicast MRB is configured.

### Supplementary Note 11

A communication method performed by user equipment in a mobile communication system that provides a multicast/broadcast service (MBS), the communication method including:
receiving, from a network node, a radio resource control (RRC) release message including configuration information of a multicast inactive multicast radio bearer (MRB) used for reception of a multicast session in an RRC inactive state, the RRC release message causing the user equipment to transition to the RRC inactive state;
attempting the reception of the multicast session using the multicast inactive MRB based on upper layer information stored in advance; and
continuing a multicast reception process using the multicast inactive MRB when the reception of the multicast session is successful as a result of the attempting.

### Supplementary Note 12

The communication method according to supplementary note 11, further including stopping the multicast reception process when the reception of the multicast session is unsuccessful as a result of the attempting.

### Supplementary Note 13

The communication method according to supplementary note 11 or 12, wherein
in the attempting, the user equipment performs the attempting for a certain period of time, and the certain period of time is configured in the user equipment from the network node.

### (6) Second Supplementary

### 1. Introduction

Work items regarding enhancement of the MBS (eMBS) are intended to support multicast reception by the UE in the inactive state and described as follows:
- To define support for the multicast reception by the UE in the RRC inactive state [RAN2, RAN3].
- A PTM configuration for the UE that receives the multicast in the RRC inactive state [RAN2].
- To investigate influences of mobility and state transitions of the UE that receives the multicast in the RRC inactive state (seamless/lossless mobility is not essential) [RAN2, RAN3]

The RAN2 has discussed this purpose and reached a series of agreement items. Based on these agreement items, an aspect the control plane for multicast reception in the inactive state is discussed in the supplementary notes.

### 2. Discussion

### 2.1 Initial Configuration Procedure of Connected UE

A RAN2 #120 has reached an agreement to advance a "mixed approach".
- The mixed approach is as follows:
   1. When the NW configures the UE to continue multicast reception in the inactive state, the NW provides the PTM configuration for an activated multicast session through RRC dedicated signaling to at least a serving cell (other cases need to be further studied).
      [···]
   3. Assume that the UE can receive the multicast service after joining the session.

A RAN2 #121 agreed to the following description.
- The UE needs to join the multicast session before receiving the multicast in the RRC inactive.
- The network may configure the UE with the PTM configuration of the (single) serving cell before the session activation when the network determines that it is useful, and the UE may store the configuration. When the session is activated, the UE can apply the configuration to receive the multicast in the inactive state without returning to RRC connected unless updated by the MCCH after the configuration.
- When the network configures the UE to receive a multicast in the inactive state, the PTM configuration can be delivered using an RRC release message including suspendconfig. No other dedicated RRC message is used to provide the PTM configuration of MBS multicast in the inactive state.
- A new MCCH logical channel for multicast in an inactive state (different from broadcast MCCH) is introduced.
- The multicast MCCH configuration is provided via a new SIB.
- As an option, the multicast MCCH configuration for the serving cell can also be provided in dedicated signaling. For this reason, optimization is not performed for the mobility.

A RAN2 #122 agreed to the following description.
- The multicast MCCH configuration uses a broadcast MCCH configuration structure (mcch-Config-r17) as a baseline.
- In order to give a notification of a change in the multicast MCCH, a change notification mechanism of a Rel-17 broadcast MCCH becomes a baseline.
- The PTM configuration of the multicast MCCH uses a broadcast PTM configuration of Rel-17 as a baseline.
- Basically, a PTM configuration of an RRC release message including suspendconfig has the same structure as the PTM configuration of the multicast MCCH.

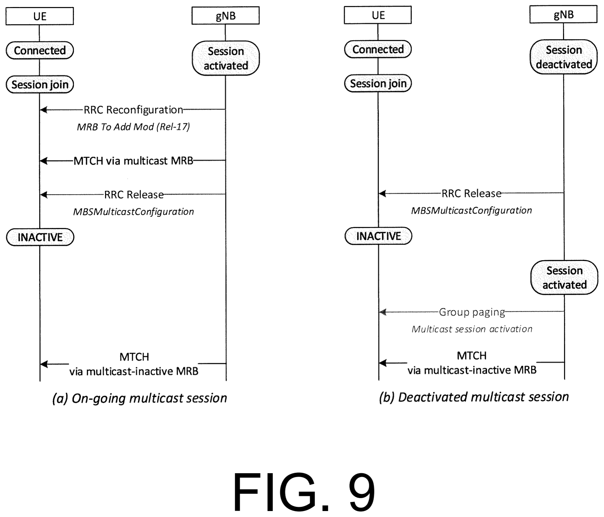

Based on these agreement items and the currently running CR, the configuration procedure of the connected UE for an ongoing (that is, activated) multicast session and a deactivated (that is, before being activated) multicast session can be considered as in FIG. 9.

For an ongoing multicast session, the UE configures a multicast MRB for multicast reception in the connected state by an RRC reconfiguration and starts receiving an MTCH as in Rel-17. For multicast reception in an inactive state, the UE is configured with a multicast inactive MRB. This is considered similar to the broadcast MRB in Rel-17 through RRC release.

It should be clarified first that the multicast inactive MRB described in the ongoing CR has the same characteristics as a Rel-18 broadcast MRB, but is an MRB that is different from a Rel-17 broadcast MRB or a Rel-17 multicast MRB.

Proposal 1: The RAN2 needs to confirm that the multicast inactive MRB functions similarly to the Rel-17 broadcast MRB but is a new MRB type for multicast reception in an inactive state.

It is apparent that, for at least ongoing multicast sessions, the UE has to immediately apply and establish the multicast inactive MRB once configured by RRC release.

Proposal 2: The RAN2 should agree that the UE immediately establishes a multicast inactive MRB when configured by RRC release for at least ongoing multicast sessions.

On the other hand, in a deactivated multicast session, the UE performs PTM configuration by the RRC release. In a case where the above proposal 2 can be agreed, the UE will immediately start receiving the MTCH, but since the MTCH is not transmitted at this time, the UE should refrain from this. Instead, the UE needs to give a notice, through RRC release, that the multicast session is still inactive so that the UE can wait for the multicast session activation notification without performing MTCH reception. Since the state of the session, that is, activation or deactivation, is different for each multicast session, the deactivation indication should be notified for each TMGI. Detailed operations need to be further studied. For example, it is necessary to study whether to apply a PTM configuration but wait for session activation.

Proposal 3: The RAN2 should agree to notify the UE through RRC release whether each multicast session has been deactivated, so that the UE does not attempt to receive the corresponding MTCH.

After transitioning to inactive, the UE monitors a multicast session activation notification (that is, group paging). Before the multicast session activation, there is a possibility that the gNB will change the PTM configuration of the session, such change being configured by the multicast MCCH of the UE in an inactive state.

From the perspective of the UE, when the UE needs to monitor a multicast MCCH of the deactivated multicast session, power consumption of the UE increases. For this reason, the UE needs to confirm that the UE does not need to monitor the multicast MCCH before receiving the multicast session activation notification. In other words, the UE may only monitor the multicast MCCH at a point in time when the activation notification is received with the TMGI of interest. The same operation can also be applied to a new SIB (such as SIB 20) for multicast MCCH configuration.

Proposal 4: The RAN2 should agree that the UE does not need to monitor a "multicast MCCH" or a new SIB (SIB 20 or the like) when the corresponding multicast session is deactivated (that is, before receiving a multicast session notification).

Upon receiving the multicast activation notification, the UE needs to check whether the MCCH configuration in the new SIB and/or the PTM configuration in the multicast MCCH has been updated in a case where the MCCH configuration and/or the PTM configuration is provided from the RRC release. As long as the configuration is not updated, the stored configuration, that is, the configuration provided by the RRC release, should be applied. Of course, in a case where the configuration is updated, the UE needs to acquire a new SIB and/or multicast MCCH.

For a new SIB, it is expected that the UE can know whether the new SIB has been updated by checking a value tag of a SIB1 as in the current situation. On the other hand, the UE cannot know whether the multicast MCCH has been updated before receiving and decoding the multicast MCCH. In this case, even when the configuration was made by RRC release, the UE needs to decode the multicast MCCH once, which is meaningless as well. In this sense, in order for the UE to know the update of the PTM configuration without decoding the multicast MCCH, the value tag needs to be introduced in the multicast MCCH. A new SIB, SIB1, or group paging needs to be further studied with respect to where the value tag of the multicast MCCH will be located.

Proposal 5: The RAN2 should agree that a multicast MCCH value tag is introduced that the UE uses to know whether the PTM configuration has been updated from that configured by the RRC release, without decoding the multicast MCCH itself.

### 2.2. Initial Configuration Procedure of Inactive UE

The RAN2 #120 agreed to use the multicast MCCH when the PTM configuration is updated.
- The mixed approach is as follows.
   1. When the NW configures the UE to continue multicast reception in the inactive state, the NW provides the PTM configuration for an activated multicast session through RRC dedicated signaling to at least a serving cell (other cases need to be further studied).
   2. The MCCH is used when the PTM configuration needs to be changed or when the PTM configuration needs to be indicated during migrating beyond the serving cell/gNB. The change of the session status and other indications need to be further studied.
      [···]

In a RAN2 #121bis-e, it was agreed to resume RRC connection when the UE does not have a PTM configuration. That is, the UE needs to transition to a connected state in order to acquire the PTM configuration.
- When an event such as session activation/resumption of data transmission occurs, the UE starts resumption of RRC connection when the UE does not have the PTM configuration.

The original interpretation of the agreement items was the concept of "mixed approach", and thus the initial PTM configuration should always be provided by dedicated signaling, and the PTM configuration can be updated by a multicast MCCH. However, the currently running CR of TS38.300 is considered to be an item that needs to be further studied. Note: Whether the UE can acquire the initial PTM configuration via the multicast MCCH needs to be further studied.

When the UE is allowed to acquire the initial PTM configuration via the multicast MCCH, it is completely the same as Rel-17 delivery Mode2 (delivery Mode2) (that is, for broadcast MBS sessions). The previous discussion of RAN2 on the agreements regarding the mixed approach has shown that the Rel-17 delivery mode2 is not acceptable for the MBS multicast in some deployments. It is not desirable to repeat the same discussion as before the mixed approach was agreed, and thus a Rel-18 mechanism should take into account deployment assumptions.

Observation 1: According to the previous discussion, it is not allowed depending on deployments for the UE to acquire the initial PTM configuration via the multicast MCCH.

However, in practice, the Rel-17 delivery mode2 is substantially the same as LTE eMBMS/SC-PTM that can handle MBMS multicast sessions, and thus the MBS multicast sessions through the delivery mode2 can also be applied to some other deployments. Furthermore, most of the current implementations of the Rel-17 delivery mode2 are reused to receive a Rel-18 multicast in an inactive state, when it is allowed to acquire the initial PTM configuration via the multicast MCCH. Depending on the implementation of the NW, the signaling overhead of broadcast signaling (that is, the multicast MCCH) can be reduced compared to dedicated signaling (that is, RRC release). Thus, it is worthwhile to study this option. In practice, in the currently running CR of TS38.331, the UE can acquire the initial PTM configuration from the multicast MCCH because the same PTM configuration (MBSMulticastConfiguration) is captured in both the multicast MCCH and the RRC release.

Observation 2: According to LTE eMBMS/SC-PTM, the UE acquiring the initial PTM configuration via the multicast MCCH can also be applied to some other deployments.

Considering the observations, an enhanced mixed approach should be studied to support all deployment assumptions in an efficient and flexible manner. In practice, this can be achieved with a very simple solution. The RRC release may indicate whether the UE is allowed to acquire the initial PTM configuration from the multicast MCCH. In this solution, when this indication is not set, the UE only follows the current agreement. That is, the initial PTM configuration is always provided by dedicated signaling, and the UE resumes the RRC connection if needed. When this indication is configured, the UE may acquire the initial PTM configuration from the multicast MCCH when the UE does not have a PTM configuration.

Proposal 6: The RAN2 should agree that the gNB can indicate by the RRC release whether the UE needs to acquire the initial PTM configuration from the multicast MCCH.

### 2.3. Configuration Update in Inactive State

In the Rel-17, there exists one MCCH in a cell. In the Rel-18, the RAN2 agreed on "introduction of a new MCCH logical channel for multicast in an inactive state (different from broadcast MCCH)". A multicast "MCCH is used when the PTM configuration needs to be changed or when the PTM configuration needs to be indicated during migrating beyond the serving cell/gNB.

Observation 3: A multicast MCCH is used to update the PTM configuration of the UE in an inactive state.

That is, in the Rel-18 network, there exist two MCCHs of a (broadcast) MCCH and a multicast MCCH. The reason for introducing separate MCCHs in cells is considered to process different service requirements for each cast type (MBS broadcast and MBS multicast).

The question is whether different multicast sessions also have different service requirements. The service requirements for the group multimedia call service and the firmware download service are quite different. For example, because the group multimedia call service is a foreground service, the PTM configuration needs to be frequently optimized, but because the firmware download service is a background service, such frequent optimization is not needed. Considering that the initial PTM configuration is provided by the RRC release, updating of the PTM configuration by multicast MCCH is needed for some services but not for other services. In this sense, introducing a plurality of multicast MCCHs is efficient for the UE and flexible for the network.

Proposal 7: The RAN2 should discuss whether to introduce a plurality of multicast MCCHs per cell.

### 2.4. UE Mobility and Service Continuity

### 2.4.1. Prioritization of Frequencies

The RAN2 #121bis-e agreed that the operation of the UE at the time of cell reselection needs to be further studied.
- Similar to the Rel-17 broadcast reception procedure, the UE acquires a new SIB and multicast MCCH after the cell reselection and acquires a PTM configuration.
- When the UE reselects a cell where PTM configuration cannot be used in the multicast MCCH, the UE starts an RRC resume procedure for an active multicast session that is interested in reception or reception continuation.
- Prioritization of frequencies may be provided to the UE for the cell reselection for multicast reception in the RRC inactive, but further study is needed as to the detailed mechanism for how to identify frequency information (e.g., SAI, USD, or frequency information provided directly from the network).
- There is no need to define a mechanism other than the prioritization of frequencies, that is, prioritization per cell in the cell reselection, so that the UE can select an appropriate cell.
- A neighbor cell list mechanism for multicast reception in an RRC inactive state is similar in some respects to a Rel-17 NCL mechanism in MBS broadcast but can be configured to be used by the UE to resume RRC connection when a service cannot be used in a reselected cell by an NCL, for example, without reading an MCCH in the reselected cell.

For frequency information, upper layers can provide the information, such as via the USD. However, considering that NR MBS transmission is decided for each cell, the RAN also needs to provide frequency information if possible, since the USD can only provide static information (especially for the UE in an inactive state), while the RAN may have up-to-date information. Therefore, as in the SIB21 of Rel-17 MBS broadcast, the gNB can broadcast frequency information so that the UE can prioritize the appropriate frequency upon cell reselection.

Proposal 8: The RAN2 should agree that the frequency information is broadcast by the gNB.

### 2.4.2. Area Scope of PTM Configuration

In the RAN2 #121 and the RAN2 #122, the area scope of a multicast MCCH and the provisioning of multicast MCCHs of neighboring cells were discussed. Some companies propose to enhance service continuity during UE migration by enabling a PTM configuration in a plurality of cells. PTM configurations for the respective cells can be easily aligned (if necessary) in the case of the intra-gNB but is difficult for the case of between gNBs, and negotiation with the Xn-AP are required.

The RAN2 agreed to the following description.
- The serving cell does not provide the PTM configuration of the neighbor cell from other gNBs.
- Further study is needed as to whether the network can provide the PTM configuration to a cell in the gNB.
- Providing a PTM configuration of a neighboring cell in the gNB with dedicated signaling is not supported.

These agreements are confusing in terms of what has been excluded. It is apparent that a serving cell does not provide a MBSMulticastConfiguration of a neighboring cell, that is, the serving cell only provides its own MBSMulticastConfiguration. However, it is inapparent whether the serving cell indicating the area scope of the MBSMulticastConfiguration (for example, the PTM configuration of the serving cell being valid in a plurality of cells) is excluded. For example, the PTM configuration of the serving cell is valid in a plurality of cells. The latter extension would have much less signaling overhead (for example, only adding a cell list) and would not be detrimental when limited to the case of the intra-gNB (that is, no influence on Xn). For this reason, the RAN2 needs to discuss whether the PTM configuration can be applied to a plurality of cells in the gNB.

Proposal 9: The RAN2 should agree that the serving cell may indicate the area scope (for example, an applicable cell list) of MBSMulticastConfiguration.

### 2.4.3. QoS Enforcement

A RAN2 #119e has reached the following agreement items relating to case 3.
- HARQ feedback and PTP are not supported in the multicast reception in the RRC inactive.

According to the agreement items, the multicast reception in an inactive state is similar to the MBS broadcast reception (so-called Delivery mode2) defined in Rel-17. The MBS broadcast is of a best-effort type.

On the other hand, ensuring QoS/reliability is an important task for the multicast session. SA2 has also questioned whether there exists a difference in the quality/reliability of the multicast reception between the connected state and the inactive state, and RAN2 #119bis-e has agreed on the following answers.
- RAN2 Q1-a) A case where there is a significant difference in the quality and reliability of MBS data reception between the UE in an RRC connected state and the UE in an RRC inactive state:
   The quality and reliability of the MBS data reception between the UE in the RRC connected state and the UE in the RRC inactive state may be different because HARQ feedback and PTP transmission are not supported, and seamless/lossless mobility is not required for multicast reception in the RRC inactive state.

The RAN2 #121bis-e agreed to introduce an event-triggered RRC resume mechanism, but trigger conditions need to be further studied.
- When the quality of the multicast data reception falls below a set threshold value, there is a possibility that the UE will trigger the resume of the RRC connection.

The RAN2 #119e has proposed to introduce a threshold value for the reception quality of RSRP and/or BLER or the like, and the threshold value is considered to be used to ensure a certain level of QoS required for multicast reception.

Regarding the threshold value of the RSRP, NR MBS is assumed to be a single-cell transmission method, and the threshold value is related to SSB or CSI-RS rather than directly to MTCH, and thus the UE will always is considered to need to transition to a connected state whenever it moves to a cell edge or performs cell reselection. This may not be an optimal operation in some deployments (such as a single frequency network) from the viewpoint of network congestion or power saving of the UE. On the other hand, the RSRP is one of the basic metrics for evaluating the reception quality and is one of the usual metrics when the gNB decides a handover (that is, the handover is performed after the UE transitions to a connected state due to the threshold value of the RSRP). That is, the RSRP is a measurement reference suitable for monitoring the reception quality.

The threshold value of the BLER is considered to be easy to understand to directly monitor the quality of the MTCH and ensure the QoS requirements. Thus, BLER is worth defining as a metric.

Another way is to define specific events. For example, when an event is configured for the cell reselection, the UE always has to transition to the connected before the cell reselection. However, there is a possibility that such an event will be emulated by the threshold value of the RSRP described above. Therefore, when the RAN2 defines an event that is a trigger condition, careful consideration is required.

In summary, at least the RSRP threshold value and/or the MTCH BLER threshold value should be used for event-triggered RRC resume.

Proposal 10: The RAN2 should agree to introduce the RSRP threshold value and/or the MTCH BLER threshold value to monitor the multicast reception quality and trigger the RRC resume.

### 2.5. Service Continuity upon RRC Resumption

It is also necessary to consider the possibility that the UE having already received a multicast session in an inactive state (that is, via a multicast inactive MRB) is paged and starts the RRC Resume procedure. After transitioning to a connected state, the UE of course desires to continue the reception of the same multicast session. However, in this case, the UE has two MRBs for the same multicast session, that is, a multicast inactive MRB) configured for multicast reception in an inactive state and a legacy multicast MRB resumed for multicast reception in a connected state.

In the Rel-17, a multicast session can be received only via a multicast MRB configured by an RRC reconfiguration. On the other hand, according to the Rel-18, the UE can receive a multicast session via a multicast inactive MRB configured by RRC release or a multicast MCCH.

Proposal 11: The RAN2 should discuss the operation of the UE upon RRC resumption during continuous reception of multicast sessions (such as processing of the multicast inactive MRB and the legacy multicast MRB).

### REFERENCE SIGNS

1: Mobile communication system
5: Network
10: RAN
20: CN
100: User equipment (UE)
110: Receiver
120: Transmitter
130: Controller
200: gNB (Base station)
210: Transmitter
220: Receiver
230: Controller
240: Backhaul communicator

## Claims

1. A communication method performed by user equipment in a mobile communication system that provides a multicast/broadcast service (MBS), the communication method comprising:
receiving, from a network node, a radio resource control (RRC) release message including PTM configuration information used for reception of a multicast session in an RRC inactive state, the RRC release message causing the user equipment to transition to the RRC inactive state;
confirming whether the RRC release message includes predetermined information indicating that start of a multicast reception process for the multicast session is suspended; and
starting the multicast reception process based on the PTM configuration information when the RRC release message does not include the predetermined information.

2. The communication method according to claim 1, further comprising suspending the start of the multicast reception process when the RRC release message includes the predetermined information.

3. The communication method according to claim 1, wherein the predetermined information is associated with a configuration of Discontinuous Reception (DRX) to be applied to the reception of the multicast session.

4. A communication method performed by user equipment in a mobile communication system that provides a multicast/broadcast service (MBS), the communication method comprising:
receiving a multicast session using a multicast-multicast radio bearer (MRB) in a radio resource control (RRC) connected state;
receiving, from a network node, an RRC release message including configuration information of a multicast inactive MRB used for reception of a multicast session in an RRC inactive state, the RRC release message causing the user equipment to transition to the RRC inactive state;
confirming whether the multicast inactive MRB corresponding to the multicast MRB is configured; and
starting a multicast reception process using the multicast inactive MRB when the multicast inactive MRB corresponding to the multicast MRB is configured.

5. The communication method according to claim 4, wherein the multicast inactive MRB corresponding to the multicast MRB is the multicast inactive MRB having a common MBS session ID with the multicast MRB or the multicast inactive MRB having a common MRB ID with the multicast MRB.

6. The communication method according to claim 4 or 5, further comprising suspending start of the multicast reception process when the multicast inactive MRB not corresponding to the multicast MRB is configured.

7. A communication method performed by user equipment in a mobile communication system that provides a multicast/broadcast service (MBS), the communication method comprising:
receiving, from a network node, a radio resource control (RRC) release message including configuration information of a multicast inactive multicast radio bearer (MRB) used for reception of a multicast session in an RRC inactive state, the RRC release message causing the user equipment to transition to the RRC inactive state;
attempting the reception of the multicast session using the multicast inactive MRB based on upper layer information stored in advance; and
continuing a multicast reception process using the multicast inactive MRB when the reception of the multicast session is successful as a result of the attempting.

8. The communication method according to claim 7, further comprising
stopping the multicast reception process when the reception of the multicast session is unsuccessful as a result of the attempting.

9. The communication method according to claim 7 or 8, wherein
in the attempting, the user equipment performs the attempting for a certain period of time, and
the certain period of time is configured in the user equipment from the network node.
